# EUROPEAN PATENT APPLICATION

(11) **EP 3 722 764 A1**
(43) Date of publication of application: **14.10.2020**
(21) Application number: 20168945.2
(22) Date of filing: 09.04.2020
(51) Int. Cl.: G01L 1/12, G01L 1/14

(54) **SENSING POLYMER STRUCTURAL BODY**

(30) Priority: 10.04.2019 JP 2019074863
(71) Applicant: JTEKT CORPORATION, Osaka-shi, Osaka 542-8502 (JP)
(72) Inventor: SHIMIZU, Yohei, Osaka-shi, Osaka 542-8502 (JP)
(74) Representative: Winter, Brandl, Fürniss, Hübner, Röss, Kaiser, Polte - Partnerschaft mbB

(57) **Abstract**

A sensing polymer structural body (10) includes a structural body (11), a sensor (12), and a power generating portion (13). The structural body (11) is made of a polymer material. The sensor (12) is embedded in the structural body (11) and is deformed together with the structural body (11) by an external force, that the sensor (12) being configured to output a signal in accordance with the deformation. The power generating portion (13) is deformed together with the structural body (11) by the external force, and the power generating portion (13) is configured to generate electric energy based on the deformation. The sensor (12) is provided inside the structural body (11) in a linear direction or in a planar direction. The sensor (12) and the power generating portion (13) are disposed such that the sensor (12) and the power generating portion (13) are deformable based on the deformation of the structural body (11).

## Description

### BACKGROUND OF THE INVENTION

### 1. Field of the Invention

The present invention relates to a sensing polymer structural body including a structural body made of a polymer material and a sensor embedded in the structural body.

### 2. Description of Related Art

In the robotics field, or a new mobility society where Mobility as a Service (Maas) and flying vehicles operate, detection of emotions and intentions of a user and detection of conditions of anomalous structural components, etc., are performed. Accordingly, more information is required from the current condition.

In the above-described technique, a polymer material (rubber, resin, or elastomer) is used as exterior materials, interior materials, or drive parts, for example. Therefore, in order to obtain various types of information, a soft material sensor is attached to a surface of the interior material made of, for example, elastomer. The soft material sensor follows deformation of the interior material and outputs a signal in accordance with the deformation. Japanese Unexamined Patent Application Publication No. 2013-178241 (JP 2013-178241 A) discloses a technique in which pressure sensors are provided on a flexible printed wiring board.

### SUMMARY OF THE INVENTION

In the technique disclosed in JP 2013-178241 A, pressure sensors are arranged to be distributed in a dotted pattern on the surface of a structural body that is elastically deformable. Therefore, when an external force acts on the pressure sensors, the external force and deformation of the structural body caused by the external force can be detected. However, when the external force acts on other portions, it may be difficult to detect the external force and the deformation of the structural body. Accordingly, to detect deformation in a wide range, many pressure sensors are conventionally required. As a result of providing many pressure sensors, wiring becomes complicated, which results in an increase in cost.

When the pressure sensors are attached on the surface of the structural body, the pressure sensors may sometimes peel off due to deformation and vibration of the structural body, etc., which causes an issue in durability. Further, in the related art, to perform detection by the sensors, it is necessary to supply the entire electric power from outside to perform the detection.

Accordingly, the invention provides a sensing polymer structural body in which deformation in a wide range of the structural body made of the polymer material and the external force that causes the deformation can be detected by the sensor and the electric power to be used for performing the detection can be generated.

A sensing polymer structural body according to one aspect of the invention includes a structural body made of a polymer material, a sensor, and a power generating portion. The sensor is embedded in the structural body and is deformed together with the structural body by an external force. The sensor is configured to output a signal in accordance with the deformation. The power generating portion is embedded in the structural body and is deformed together with the structural body by the external force. The power generating portion is configured to generate electric energy based on the deformation. The sensor is provided inside the structural body in a linear direction or in a planar direction, and the sensor and the power generating portion are disposed at positions at which the sensor and the power generating portion are deformable in accordance with the deformation of the structural body.

According to the sensing polymer structural body of the above aspect, the sensing polymer structural body functions as a unit configured to detect the external force or deformation based on the external force. The sensor is provided inside the structural body in the linear direction or in the planar direction. With this configuration, in the structural body, deformation of the structural body in a wide range in the linear direction or in the planar direction or the external force can be detected even without providing many sensors, in addition to deformation of the structural body that occurs in a narrow range such as a dotted pattern. For example, bending of the sensing polymer structural body or the external force that causes the bending is detected. As described above, when the structural body is deformed by the external force the sensor can detect deformation of the structural body or the external force that causes the deformation, and the power generating portion can generate the electric energy based on an energy of deformation.

In the above aspect, the sensor and the power generating portion may be disposed overlapping with each other in a direction of the external force. The sensor and the power generating portion are disposed such that the sensor and the power generating portion are both elastically deformable based on the deformation of the structural body.

In the above aspect, the sensor and the power generating portion each may include a configuration that extends along a plane, and the sensor and the power generating portion may be disposed such that a virtual line extending in a direction in which the external force acts penetrates the sensor and the power generating portion. With this configuration, the sensor and the power generating portion are disposed such that the sensor and the power generating portion are both elastically deformable based on the deformation of the structural body.

In the above aspect, the sensor may include a configuration that extends along a line, the power generating portion may include a configuration that extends along a plane, and the sensor and the power generating portion may be disposed such that a virtual line extending in a direction in which the external force acts penetrates the power generating portion and a virtual plane including the sensor. With this configuration, the sensor and the power generating portion are disposed such that the sensor and the power generating portion are both elastically deformable based on the deformation of the structural body.

When the external force acts on a specific portion (one portion) of the structural body, the specific portion is deflected by the external force and the entire structural body is bent. In this case, the deformation amount may sometimes increase on the side that is distant from the surface on which the external force acts. In the above aspect, the power generating portion may be provided at a position farther from a surface of a specific portion of the structural body than a position of the sensor is, the specific portion being a portion on which the external force acts. According to this configuration, the power generating portion can generate the electric energy effectively.

Further, in the above aspect, when the external force acts on the surface of the specific portion (one portion) of the structural body, the structural body is first deformed in a region including the surface of the specific portion. Therefore, the power generating portion may be provided at a position closer from a surface of a specific portion of the structural body than a position of the sensor is, the specific portion being a portion on which the external force acts. With this configuration, the sensing polymer structural body can be equipped with a function to first generate the electric energy by the power generating portion and detect deformation of the structural body by the sensor using the generated electric energy.

In the above aspect, the power generating portion that is disposed close to the surface may be a first power generating portion, and the sensing polymer structural body may further include a second power generating portion that is provided at a position farther from the surface of the specific portion of the structural body than the position of the sensor is. When the external force acts on the surface of the specific portion of the structural body, the structural body is deformed. The first power generating portion then first generates the electric energy. The sensor can operate using the generated electric energy. That is, the sensing polymer structural body does not perform detection of deformation of the structural body, etc., using the sensor until the first power generating portion generates the electric energy. When the first power generating portion generates the electric energy, the above detection using the sensor is performed. When the external force acts on the specific portion (one portion) of the structural body, the specific portion is deflected by the external force and the entire structural body is bent. In this case, the deformation amount may sometimes increase on the side that is distant from the surface on which the external force acts. With this configuration, the second power generating portion that is disposed at the position distant from the surface can generate the electric energy effectively, whereby the detection can be stabilized.

According to the present invention, in the sensing polymer structural body, deformation in a wide range of the structural body made of a polymer material or the external force that causes the deformation can be detected by the sensor, and the electric power to be used for performing the detection can be generated.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view showing an example of a sensing polymer structural body;
FIG. 2 is a perspective view showing another example of the sensing polymer structural body;
FIG. 3 is an explanatory diagram of a sensor configured of a coil;
FIG. 4 is an explanatory diagram of a power generating portion;
FIG. 5 is a block diagram for the sensing polymer structural body;
FIG. 6 is a perspective view showing a modification example of the sensing polymer structural body;
FIG. 7 is a perspective view showing a modification example of the sensing polymer structural body;
FIG. 8 is a perspective view showing a modification example of the sensing polymer structural body;
FIG. 9 is an explanatory diagram showing a modification example of the sensing polymer structural body when viewed in a side view; and
FIG. 10 is a flowchart illustrating operations of the sensing polymer structural body having the configuration shown in FIG. 9.

### DETAILED DESCRIPTION OF EMBODIMENTS

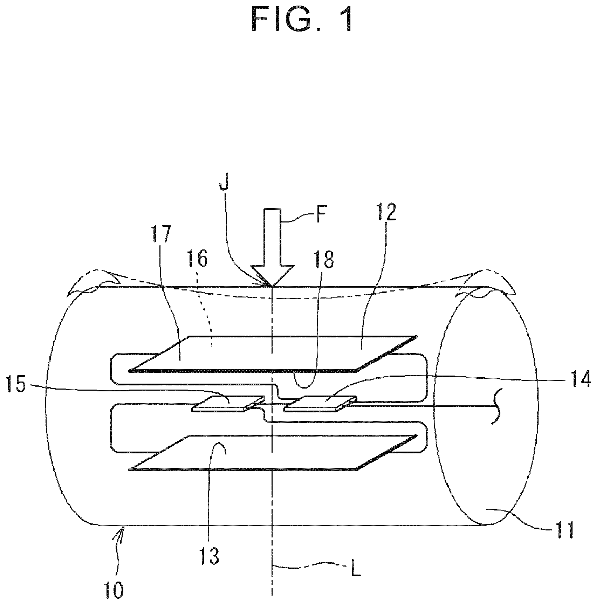

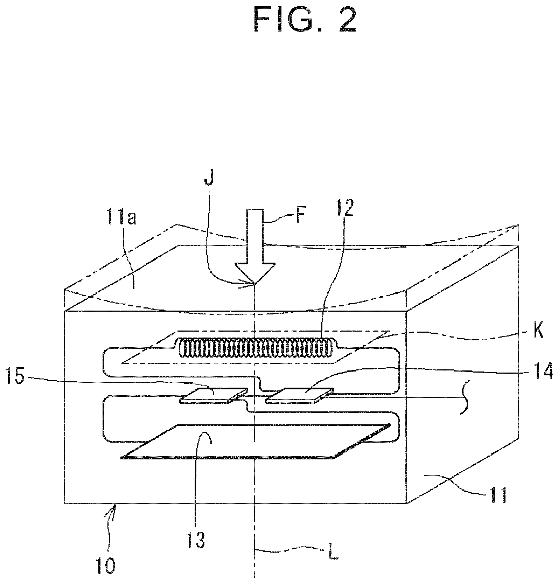

FIG. 1 is a perspective view showing an example of a sensing polymer structural body. FIG. 2 is a perspective view showing another example of the sensing polymer structural body. A sensing polymer structural body 10 includes a structural body 11 made of a polymer material. The sensing polymer structural body 10 detects deformation of the structural body 11 and an external force F that causes the deformation by a sensor 12. The sensing polymer structural body 10 is applied to, for example, steering wheels and interior parts such as armrests or seats of vehicles, and drive parts of various mechanical devices.

When the sensing polymer structural body 10 is applied to the steering wheel of a vehicle, the sensing polymer structural body 10 constitutes a part of the steering wheel, and has a cylindrical shape as shown in FIG. 1. That is, the sensing polymer structural body 10 includes the structural body 11 made of a cylindrical polymer material. When the sensing polymer structural body 10 is applied to the interior material such as armrests or seats, the sensing polymer structural body 10 constitutes a part of the interior material and has a rectangular cylinder shape (rectangular block shape) as shown in FIG. 2. That is, the sensing polymer structural body 10 includes the structural body 11 made of a rectangular cylindrical polymer material. The structural body 11 may have other shapes than the cylindrical shape and the rectangular cylindrical shape, and the shape may be changed in accordance with application targets.

As shown in each of FIGS. 1 and 2, the sensing polymer structural body 10 includes the structural body 11, the sensor 12, and a power generating portion 13. The structural body 11 is made of a polymer material and is elastically deformable. The sensing polymer structural body 10 further includes a calculation portion 14 and a power supply portion 15. The structural body 11 in this disclosure is made of elastomer. The structural body 11 may be made of rubber. The structural body 11 is elastically deformed when the structural body 11 receives the external force F. In embodiments shown in FIGS. 1 and 2, the external force F acts on a central portion of the structural body 11 in a longitudinal direction. Therefore, the structural body 11 is deformed in a manner such that the central portion of the structural body 11 is deflected and bent as shown by a long dashed double-short dashed line in FIGS. 1 and 2.

In the embodiment shown in FIG. 1, the structural body 11 has a cylindrical shape. Therefore, a direction in which the external force (load) F acts is a radial direction based on the shape. In the embodiment shown in FIG. 2, the structural body 11 has a rectangular cylindrical shape. Therefore, the external force F acts on the structural body 11 from above. That is, the external force F acts on a central portion of a one surface 11a of the structural body 11 and in a direction perpendicular to the one surface 11a. Note that the external force F may act from a direction that is inclined with respect to a perpendicular line to the one surface 11a.

The sensor 12 is provided to be embedded in the structural body 11. The sensor 12 is a soft material sensor that is deformed together with deformation of the structural body 11 by the external force F. In an embodiment shown in FIG. 1, the sensor 12 includes a dielectric elastomer 16 and a pair of electrodes 17, 18. The dielectric elastomer 16 has a film shape. The electrodes 17, 18 each have a film shape and are elastic. The dielectric elastomer 16 is interposed between the electrodes 17, 18. When the structural body 11 is deformed by the external force F, the dielectric elastomer 16 and the electrodes 17, 18 (the sensor 12) are deformed to follow the deformation of the structural body 11. The deformation described above changes a capacitance of the sensor 12. The change in the capacitance is a change in a signal output from the sensor 12. The signal output from the sensor 12 is input to the calculation portion 14. The calculation portion 14 obtains various types of data, such as a magnitude of the external force F that acts on the structural body 11, and (or) deformation (deformation amount) of the structural body 11, based on the change in the output signals as described above.

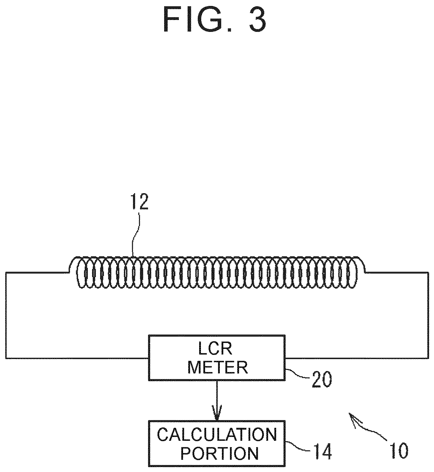

In an embodiment shown in FIG. 2, the sensor 12 is configured of a metallic fiber coil. An alternating current signal is input to the coil. When the structural body 11 is deformed by the external force F, the coil (the sensor 12) is deformed to follow the deformation of the structural body 11. The deformation above changes inductance in the sensor 12. The change in the inductance is a change in the signal output from the sensor 12. When the sensor 12 is a coil, as shown in FIG. 3, the sensing polymer structural body 10 further includes an LCR meter 20 as a detection portion. The LCR meter 20 detects the inductance of the sensor 12 configured of a coil. The LCR meter 20 outputs the detected inductance as a signal to the calculation portion 14. The calculation portion 14 detects a change in the inductance (a temporal change) based on the output signal. The calculation portion 14 obtains various types of data, such as a magnitude of the external force F that acts on the structural body 11, and (or) deformation (deformation amount) of the structural body 11, based on the change in the inductance. The calculation portion 14 may be configured to include the LCR meter 20.

The sensor 12 may be of other types, and may be an ionic polymer-metal composite (IPMC) or a fluorine-based piezoelectric element. Also in this case, the sensor 12 has a planar configuration as in the embodiment shown in FIG 1. The type of the sensor 12 is selected in accordance with a strain amount and thermal environment, etc., of the structural body 11.

As described above, the sensor 12 is deformed together with the structural body 11, and outputs a signal in accordance with the deformation. The sensor 12 shown in FIG. 1 includes a configuration that extends along a plane. That is, the sensor 12 has a film shape (sheet shape), and is provided to extend continuously in a planar direction in the structural body 11. The sensor 12 shown in FIG. 2 includes a configuration that extends along a line. That is, the sensor 12 are provided to extend continuously in a linear direction in the structural body 11.

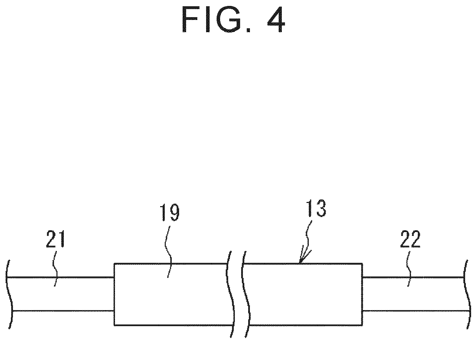

The power generating portion 13 is provided to be embedded in the structural body 11 together with the sensor 12. The power generating portion 13 is configured of a soft material element that is deformed with the structural body 11 by the external force. In the embodiments shown in FIGS. 1 and 2, the power generating portion 13 is configured of a piezoelectric element (fluorine-based piezoelectric element 19). FIG. 4 is an explanatory diagram of the power generating portion 13. The power generating portion 13 is configured such that a pair of electrodes 21, 22 are connected to the fluorine-based piezoelectric element 19 having a film shape. In FIGS. 1 and 2, when the structural body 11 is deformed by the external force F, the fluorine-based piezoelectric element 19 (power generating portion 13) is deformed to follow the deformation of the structural body 11. The deformation above makes it possible to obtain an electric energy due to an piezoelectric effect produced by the fluorine-based piezoelectric element 19. The obtained electric energy is supplied to the power supply portion 15.

The power generating portion 13 may have other configurations, and may have a configuration including a dielectric elastomer and a pair of electrodes (similar configuration to that of the sensor 12). In the configuration, the dielectric elastomer is interposed between the electrodes. In this case, an electric charge is applied to the electrodes in advance based on the electric power supplied from the power supply portion 15. A change in the dielectric elastomer changes the capacitance, whereby the electric charge is obtained. The fluorine-based piezoelectric element 19 and the electrodes 21, 22 each have a film shape (sheet shape). Therefore, the power generating portion 13 shown in FIGS. 1 and 2 is configured to extend along a plane. The power generating portion 13 is deformed in a direction intersecting with (perpendicular to) a surface of the power generating portion 13 (the fluorine-based piezoelectric element 19), which has a film shape. This deformation increases a power generation amount. The direction perpendicular to the surface of the power generating portion 13 is referred to as a main power generation direction of the power generating portion 13.

As described above, the power generating portion 13 is deformed together with the sensor 12 and the structural body 11, and the electric energy is generated in accordance with the deformation. The power generating portion 13 shown in each of FIGS. 1 and 2 includes a configuration that extends along a plane. That is, the power generating portion 13 is provided to extend continuously in a planar direction in the structural body 11.

The sensor 12 and the power generating portion 13 are both elastically deformable. It is preferable that rigidity of the power generating portion 13 be lower than rigidity of the sensor 12. That is, the power generating portion 13 is more elastically deformable, compared to the sensor 12. With this configuration, power generation by the power generating portion 13 is performed with high priority. On the other hand, sensitivity of the sensor 12 can be increased based on setting of an amplifier, etc. Therefore, the sensor 12 can make detection with high accuracy even if the sensor 12 is more difficult to be deformed compared to the power generating portion 13.

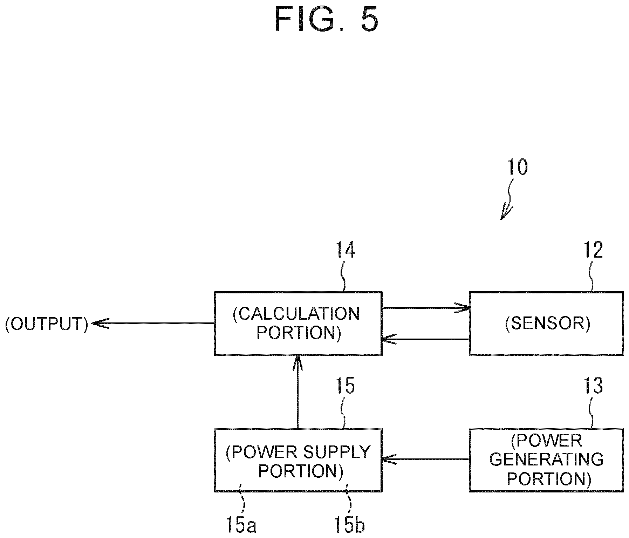

FIG. 5 is a block diagram of the sensing polymer structural body 10. The power supply portion 15 includes, for example, a circuit portion 15a including a switch element, etc., and a capacitor 15b. Electric power (electric energy) supplied from the power generating portion 13 is stored (charged) in the power supply portion 15. The power supply portion 15 can supply the electric power to the calculation portion 14. Further, the electric power is supplied from the power supply portion 15 to the sensor 12 via the calculation portion 14. The power supply portion 15 is also embedded in the structural body 11 together with the sensor 12 and the power generating portion 13.

The calculation portion 14 is configured of a microcomputer. The calculation portion 14 has a function to obtain signals from the sensor 12, perform various calculation processes, and generate and output a predetermined data. The calculation portion 14 stores various programs and calculation equations to perform the calculation processes above. The calculation portion 14 stores an arithmetic expression (mathematical model) for converting signals from the sensor 12 (LCR meter 20) into various types of data, such as deformation (deformation amount) of the structural body 11. The calculation portion 14 outputs various types of data externally by wire or wirelessly. The calculation portion 14 is embedded in the structural body 11 together with the sensor 12 and the power generating portion 13.

In the embodiment shown in FIG. 1, as described above, the sensor 12 and the power generating portion 13 each include a configuration that extends along a plane. The arrangement of the sensor 12 and the power generating portion 13 that are embedded in the structural body 11 is described below. That is, the sensor 12 and the power generating portion 13 are disposed such that a virtual line L (shown by a long dashed short dashed line) extending in a direction in which the external force F acts penetrates the sensor 12 and the power generating portion 13, both having a planar shape. The sensor 12 and the power generating portion 13 overlap with each other in a direction of the external force F. As described above, in the sensing polymer structural body 10 of the present disclosure, the sensor 12 and the power generating portion 13 are disposed such that the sensor 12 and the power generating portion 13 are both elastically deformed based on the deformation of the structural body 11.

As described above, the dielectric elastomer 16 and the electrodes 17, 18 that configure the sensor 12 have a film shape (sheet shape). Therefore, the sensor 12 shown in FIG. 1 includes a configuration that extends along a plane. The sensor 12 is deformed in the direction intersecting with (perpendicular to) the surface of the sensor 12, whereby the capacitance is significantly changed. The direction perpendicular to the surface of the sensor 12 is referred to as the main sensing direction of the sensor 12. In the present disclosure, the main sensing direction of the sensor 12 is parallel to (or coincides with) the virtual line L extending in the direction in which the external force F acts. The main sensing direction and the main power generation direction of the power generating portion 13 are parallel to (or coincide with) each other. The main power generation direction of the power generating portion 13 is parallel to (or coincides with) the virtual line L in the direction in which the external force F acts.

The external force F is an external force that acts mainly on the sensing polymer structural body 10. When the sensing polymer structural body 10 is applied to a part of a steering wheel of a vehicle, a force with which a driver (a user) holds the steering wheel is the external force F that mainly acts thereon. The external force F acts in a diameter direction of the sensing polymer structural body 10 having a cylindrical shape. That is, the direction in which the external force F mainly acts is the diameter direction. The diameter direction is a direction of main deformation of the sensing polymer structural body 10. The sensor 12 and the power generating portion 13 are disposed overlapping with each other in the diameter direction. The direction of the external force F may be inclined with respect to the diameter direction. Even in this case, the sensor 12 and the power generating portion 13 are disposed overlapping with each other in the direction of the external force F.

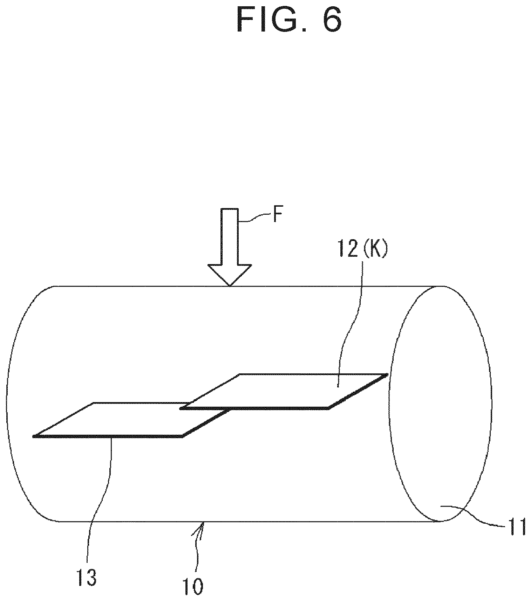

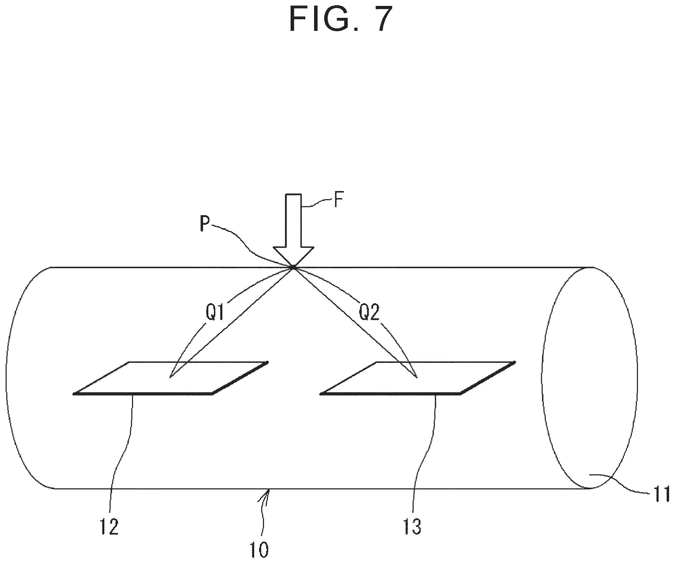

In the embodiment shown in FIG. 1, the sensor 12 and the power generating portion 13 both having a planar shape are disposed in parallel to each other. However, the surface of the sensor 12 and the surface of the power generating portion 13 may be inclined with each other. The sensor 12 and the power generating portion 13 both having a planar shape may have the same size, or may have a different size from each other. In the embodiment shown in FIG. 1, the sensor 12 and the power generating portion 13 both having a planar shape are disposed such that the sensor 12 and the power generating portion 13 entirely face each other. However, when viewed from the direction in which the external force F acts, as shown in FIG. 6, the sensor 12 and the power generating portion 13 may at least partially overlap with each other (may at least partially face each other). Further, as another embodiment, as shown in FIG. 7, the sensor 12 and the power generating portion 13 may be disposed at two positions at which a distance Q1 and a distance Q2 from a point of action P of the external force F in the structural body 11 have the same distance.

In the embodiment shown in FIG. 2, as described above, the sensor 12 includes a configuration that extends along a line, and the power generating portion 13 includes a configuration that extends along a plane. The arrangement of the sensor 12 and the power generating portion 13 that are embedded in the structural body 11 is described below. That is, the sensor 12 and the power generating portion 13 are disposed such that the virtual line L extending in the direction in which the external force F acts penetrates the power generating portion 13 having a planar shape and a virtual plane K including the sensor 12 having a linear shape. The sensor 12 (the virtual plane K including the sensor 12) and the power generating portion 13 are disposed overlapping with each other in the direction of the external force F. As described above, in the sensing polymer structural body 10 of the present disclosure, the sensor 12 and the power generating portion 13 are disposed such that the sensor 12 and the power generating portion 13 are both elastically deformable based on the deformation of the structural body 11.

The sensor 12 has a linear shape that is long in one direction. Therefore, a direction perpendicular to the one direction is a direction in which inductance significantly changes. The direction perpendicular to the one direction (longitudinal direction) is referred to as a main sensing direction of the sensor 12. In the present disclosure, the main sensing direction of the sensor 12 is parallel to (or coincides with) the virtual line L extending in the direction in which the external force F acts. The main sensing direction and the main power generation direction of the power generating portion 13 are parallel to (or coincide with) each other. The main power generation direction of the power generating portion 13 is parallel to (or coincides with) the virtual line L extending in the direction in which the external force F acts.

The external force F is an external force that acts mainly on the sensing polymer structural body 10. When the sensing polymer structural body 10 is applied to the interior material of a vehicle, the force caused by a contact of a part of the user's body serves as the external force F that mainly acts. The external force F acts in the direction intersecting with (perpendicular to) the one surface 11a of the structural body 10 having a rectangular cylindrical shape. That is, the direction in which the external force F mainly acts is the direction intersecting with (perpendicular to) the one surface 11a (hereinafter referred to as an "intersection direction"). The intersection direction is the main deformation direction of the sensing polymer structural body 10. The sensor 12 (the virtual plane K including the sensor 12) and the power generating portion 13 are disposed overlapping with each other in the intersection direction. Note that the direction of the external force F may be inclined with respect to the perpendicular line of the one surface 11a. Even in this case, the sensor 12 (the virtual plane K including the sensor 12) and the power generating portion 13 are disposed overlapping with each other in the direction of the external force F.

In the embodiment shown in FIG. 2, the virtual plane K including the sensor 12 is parallel to the power generating portion 13 having a planar shape. A longitudinal direction of the sensor 12 and a longitudinal direction of the power generating portion 13 may be the same or may be different from each other. In the embodiment shown in FIG. 2, the sensor 12 and the power generating portion 13 are arranged such that the sensor 12 having a linear shape and the power generating portion 13 having a planar shape entirely face each other. However, when viewed from the direction in which the external force F acts, as shown in FIG. 6, the sensor 12 and the power generating portion 13 may at least partially overlap with each other. Further, as yet another embodiment, as shown in FIG. 7, the virtual plane K including the sensor 12 and the power generating portion 13 may be disposed at two positions at which the distance Q1 and the distance Q2 from the point of action P of the external force F in the structural body 11 have the same distance.

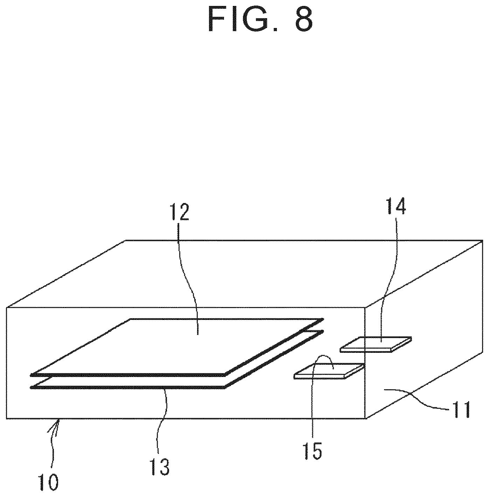

As shown in FIGS. 1 and 2, the calculation portion 14 and the power supply portion 15 are disposed between the sensor 12 and the power generating portion 13. As yet another embodiment, as shown in FIG. 8, the calculation portion 14 and the power supply portion 15 may be provided at positions distant from the sensor 12 and the power generating portion 13 in the longitudinal direction of the structural body 11. In this case, it is less likely that the rigidity of the calculation portion 14 and the power supply portion 15 hinders deformation of the sensor 12 and the power generating portion 13.

The sensor 12 having a linear shape and the power generating portion 13 having a planar shape as shown in FIG. 2 may be embedded in the structural body 11 having a cylindrical shape as shown in FIG. 1. Further, the sensor 12 and the power generating portion 13 both having a planar shape as shown in FIG. 1 may be embedded in the structural body 11 having a rectangular cylindrical shape as shown in FIG. 2.

As described above, the sensing polymer structural body 10 of each of the above embodiments includes the structural body 11 made of a polymer material, the sensor 12, and the power generating portion 13. The sensor 12 is embedded in the structural body 11 and deformed together with the structural body 11 by the external force F. The sensor 12 outputs signals in accordance with the deformation. The power generating portion 13 is embedded in the structural body 11 and deformed together with the structural body 11 by the external force F. The power generating portion 13 generates an electric energy in accordance with the deformation. The sensor 12 is provided inside the structural body 11 in the linear direction or the planar direction. The sensor 12 and the power generating portion 13 are disposed such that the sensor 12 and the power generating portion 13 are both elastically deformable based on the deformation of the structural body 11. That is, the sensor 12 and the power generating portion 13 are disposed such that the power generating portion 13 can generate the electric energy based on deformation of the structural body 11 that deforms the sensor 12.

According to the sensing polymer structural body 10, the sensing polymer structural body 10 functions a unit configured to detect the external force F or deformation based on the external force F. The sensor 12 is provided inside the structural body 11 in the linear direction or in the planar direction. With this configuration, in the structural body 11, deformation of the structural body 11 in a wide range in the linear direction or in the planar direction or the external force F can be detected, in addition to deformation of the structural body 11 that occurs in a narrow range such as a dotted pattern. For example, as described with referring to FIGS. 1 and 2, bending of the sensing polymer structural body 10 or the external force F that causes the bending is detected. Further, the power generating portion 13 generates electric power based on the external force F that can be detected by the sensor 12. That is, the power generating portion 13 generates the electric energy using the external force F that deforms the sensor 12. As described above, when the structural body 11 is deformed by the external force F, the sensor 12 can detect the deformation of the structural body 11 or the external force F that causes the deformation, and the power generating portion 13 can generate the electric energy based on energy of deformation.

As shown each of FIGS. 1 and 2, the external force F acts on a specific portion (one portion) J of the structural body 11. When the specific portion J of the structural body 11 is deflected by the external force F and the entire structural body 11 is bent, the deformation amount may sometimes be increased on the side that is distant from the surface on which the external force F acts. Therefore, in such a case, as shown in each of FIGS. 1 and 2, it is preferable that the power generating portion 13 is provided at a position farther from the surface of a specific portion J of the structural body 11 than the position of the sensor 12 is, the specific portion being a portion on which the external force F acts. According to this configuration, the power generating portion 13 can generate the electric energy effectively.

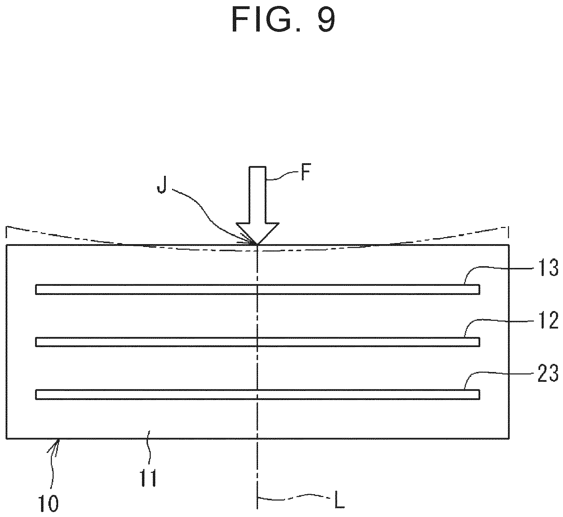

FIG. 9 is an explanatory diagram showing a modification example, and is a side view of the sensing polymer structural body 10. In FIG. 9, illustration of the calculation portion 14 and the power supply portion 15 are omitted. The calculation portion 14 and the power supply portion 15 are embedded in the structural body 11 as in the above embodiments. In the case of the sensing polymer structural body 10 shown in FIG. 9, the power generating portion 13 is provided at a position closer from the surface of the specific portion J of the structural body 11 than the position of the sensor 12 is, the specific portion J being a portion on which the external force F acts. This is because when the external force F acts on the surface of the specific portion J of the structural body 11, the structural body 11 is first deformed in a region including the surface of the specific portion J.

When the power generating portion 13 is provided at a position closer from the surface of the specific portion J than the position of the sensor is, the sensing polymer structural body 10 may be equipped with a function to first generate the electric energy by the power generating portion 13 and detect deformation of the structural body 11 by the sensor 12 using the generated electric energy. This configuration is suitable when electric power (alternating current signal) is required for the sensor 12 to operate as in the configuration in which the sensor 12 is configured of a coil (refer to FIG. 2). Further, as in the embodiment in which the sensor 12 includes the dielectric elastomer 16 (refer to FIG. 1), even if the sensor 12 does not require the electric power to operate, the electric power is still required for the calculation portion 14 to perform various processes based on the signals of the sensor 12. Therefore, even in the embodiment in which the sensor 12 includes the dielectric elastomer 16, the configuration shown in FIG. 9 is preferable.

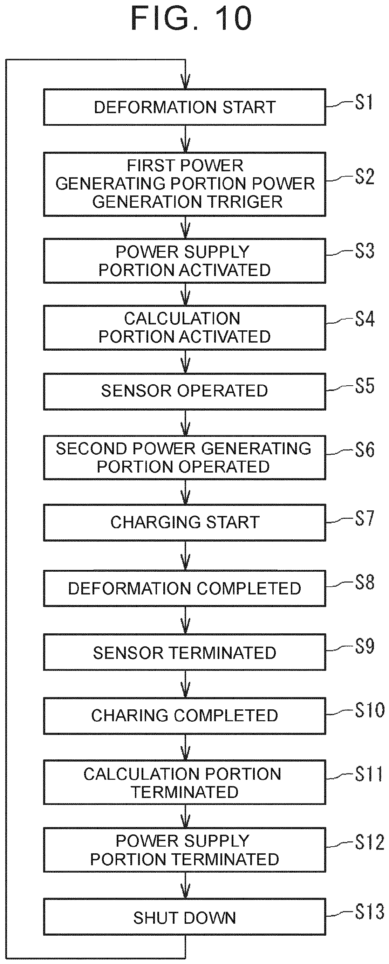

In the embodiment shown in FIG. 9, the sensing polymer structural body 10 further includes a second power generating portion 23. The power generating portion 13 that is disposed at a position close to the surface of the specific portion J of the structural body 11 on which the external force F acts is referred to as a first power generating portion 13. The second power generating portion 23 is provided at a position farther from a surface of a specific portion J than the position of the sensor 12 is. The second power generating portion 23 has the same configuration as that of the first power generating portion 13. The sensor 12, the first power generating portion 13, and the second power generating portion 23 are disposed such that the first power generating portion 13 and the second power generating portion 23 generate the electric energy based on deformation of the structural body 11 that deforms the sensor 12. Similar to the first power generating portion 13, the second power generating portion 23 supplies the electric power to the power supply portion 15. FIG. 10 is a flowchart for explaining operations of the sensing polymer structural body 10 shown in FIG 9. Hereinafter, operations of the sensing polymer structural body 10 shown in FIG. 9 will be described sequentially.

When the external force F acts on the surface of the specific portion J of the structural body 11, the structural body 11 is deformed (in step S1 in FIG. 10). The first power generating portion 13 then first generates the electric energy (in step S2). The electric energy serves as a power generation trigger. The sensor 12 operates using the generated electric energy. That is, the power supply portion 15 is activated by the power generation trigger (in step S3) and the calculation portion 14 is also activated (in step S4). The sensor 12 is deformed together with deformation of the structural body 11 by the external force F. Therefore, the calculation portion 14 obtains signals (change in the signals) from the sensor 12. As described above, when the external force F acts on the structural body 11 and the first power generating portion 13 generates the electric energy, the above detection using the sensor 12 is performed (in step S5). The second power generating portion 23 is deformed by the external force F and the electric energy is generated (in step S6). As shown by a virtual line (a long dashed double-short dashed line) in FIG. 9, the external force F acts on the specific portion J of the structural body 11 and the specific portion J is deflected by the external force F. The structural body 11 is thus bent entirely. Then, as described above, the deformation amount may increase on the side that is distant from the surface of the specific portion J on which the external force F acts. Therefore, the electric energy generated by the second power generating portion 23 increases, and charging by the power supply portion 15 is started (in step S7).

When deformation of the structural body 11 is completed (in step S8), there is no change occurring in the signals from the sensor 12. On the basis of this, the detection using the sensor 12 is completed (in step S9). Charging by the first power generating portion 13 and the second power generating portion 23 is also completed (in step S10). The processes performed by the calculation portion 14 (the detection above) and the function of the power supply portion 15 are terminated as any change is not made in the signals from the sensor 12 (in steps S11, S12). Consequently, the sensing polymer structural body 10 is shut down (in step S13). In step S7, the power supply portion 15 maintains the charged state. The external force F again acts on the surface of the specific portion J from the shut-down state, the structural body 11 is deformed (in step S1). The processes in step S2 and subsequent processes are repeatedly performed. That is, the sensing polymer structural body 10 automatically starts up from the shut-down state.

As described above, according to the embodiment shown in FIG. 9, the sensing polymer structural body 10 does not perform detection of deformation of the structural body 11, etc., by the sensor 12 until the first power generating portion 13 generates the electric energy. That is, until the external force F acts, the sensing polymer structural body 10 is in the shut-down state and thus does not consume the electric power. When the detection above by the sensor 12 using the electric energy of the first power generating portion 13 is enabled, the electric energy can be effectively generated by the second power generating portion 23 that is disposed on the side distant from the surface of the specific portion J. Consequently, the detection above can be stabilized.

The sensing polymer structural body 10 can be applied to parts other than the steering wheel of the vehicle, the interior material of the vehicle such as armrests and seats. The sensing polymer structural body 10 can be applied to sealing devices such as an oil seal, or drive parts such as gears or shafts. Further, in each of the above embodiments, the configuration in which one sensor 12 is provided for the structural body 11. However, a plurality of the sensors 12 may be provided for the structural body 11. The sensor 12 having a linear shape may be configured by rolling the sensor 12 having a planar shape as shown in FIG. 1 into a tubular shape. With this configuration, the main sensing direction of the sensor 12 having a tubular shape that is long in one direction (having a linear shape) is a direction perpendicular to the one direction (longitudinal direction).

The embodiment disclosed herein is illustrative but is not limitative in all respects. The scope of rights of the present invention is not limited to the embodiment described above, but encompasses all modifications within the scope of structures described in the claims and their equivalents.

## Claims

1. A sensing polymer structural body (10) **characterized by** comprising:
a structural body (11) made of a polymer material;
a sensor (12) that is embedded in the structural body (11) and is deformed together with the structural body (11) by an external force, that the sensor (12) being configured to output a signal in accordance with the deformation; and
a power generating portion (13) that is embedded in the structural body (11) and is deformed together with the structural body (11) by the external force, that the power generating portion (13) being configured to generate electric energy based on the deformation, wherein
the sensor (12) is provided inside the structural body (11) in a linear direction or in a planar direction, and the sensor (12) and the power generating portion (13) are disposed at positions at which the sensor (12) and the power generating portion (13) are deformable in accordance with the deformation of the structural body (11).

2. The sensing polymer structural body (10) according to claim 1, **characterized in that** the sensor (12) and the power generating portion (13) are disposed overlapping with each other in a direction of the external force.

3. The sensing polymer structural body (10) according to claim 1 or 2, **characterized in that** the sensor (12) and the power generating portion (13) each include a configuration that extends along a plane, and the sensor (12) and the power generating portion (13) are disposed such that a virtual line extending in a direction in which the external force acts penetrates the sensor (12) and the power generating portion (13).

4. The sensing polymer structural body (10) according to claim 1 or 2, **characterized in that** the sensor (12) includes a configuration that extends along a line, the power generating portion (13) includes a configuration that extends along a plane, and the sensor (12) and the power generating portion (13) are disposed such that a virtual line extending in a direction in which the external force acts penetrates the power generating portion (13) and a virtual plane including the sensor (12).

5. The sensing polymer structural body (10) according to any one of claims 1 to 4, **characterized in that** the power generating portion (13) is provided at a position farther from a surface of a specific portion of the structural body (11) than a position of the sensor (12) is, the specific portion being a portion on which the external force acts..

6. The sensing polymer structural body (10) according to any one of claims 1 to 4, **characterized in that** the power generating portion (13) is provided at a position closer from a surface of a specific portion of the structural body (11) than a position of the sensor (12) is, the specific portion being a portion on which the external force acts..

7. The sensing polymer structural body (10) according to claim 6, **characterized in that** the power generating portion (13) that is disposed close to the surface is a first power generating portion, and the sensing polymer structural body further includes a second power generating portion (23) that is provided at a position farther from the surface of the specific portion of the structural body (11) than the position of the sensor (12) is.
